# EUROPÄISCHE PATENTSCHRIFT

(11) **EP 1 840 400 B1**
(45) Veröffentlichungstag und Bekanntmachung des Hinweises auf die Patenterteilung: **23.01.2013**
(21) Anmeldenummer: 07006451.4
(22) Anmeldetag: 29.03.2007
(51) Int. Cl.: F16D 21/06

(54) **Kupplungsvorrichtung mit einer Kupplung und einem damit verbundenen Drehschwingungsdämpfer sowie Getriebe mit einer solchen Kupplungsvorrichtung**
Coupling device with a coupling and a torsional vibration damper connected to it and transmission with such a coupling device
Dispositif d'embrayage doté d'un embrayage et d'un amortisseur de vibrations de torsions et transmission dotée d'un tel dispositif d'embrayage

(30) Priorität: 29.03.2006 DE 102006014562
(43) Veröffentlichungstag der Anmeldung: 03.10.2007
(73) Patentinhaber: AUDI AG, 85045 Ingolstadt (DE); Volkswagen Aktiengesellschaft, 38440 Wolfsburg (DE)
(72) Erfinder: Grünleitner, Holger, Dr., 85051 Ingolstadt (DE); Lerch, Alexander, 34327 Körle (DE)
(74) Vertreter: Lehle, Josef

(56) Entgegenhaltungen:
- EP-A1- 1 582 765
- EP-A2- 1 174 631
- DE-A1- 10 151 654
- DE-A1- 19 528 571
- DE-C1- 10 223 780
- JP-A- 2001 263 371

## Beschreibung

Die Erfindung betrifft eine Kupplungsvorrichtung mit einer Kupplung und einer damit verbundenen Drehschwingungsdämpfereinheit nach dem Oberbegriff des Patentanspruchs 1 sowie Getriebe für ein Kraftfahrzeug mit einer solchen Kupplungsvorrichtung nach dem Patentanspruch 16.

Eine solche Kupplungsvorrichtung bzw. Kupplung-Dämpfer-Einheit kann beispielsweise eine als Lamellenkupplung ausgebildete Nasskupplung mit einem integrierten, nasslaufenden Schwingungsdämpfer in einem automatischen Getriebe eines Kraftfahrzeugs sein.

In diesem Fall kann eine mit einer Brennkraftmaschine verbundene Kurbelwelle mit einer aus dem Getriebe herausgeführten Dämpfernabe gekoppelt sein, wie es in der gattungsgemäßen Kupplungsvorrichtung nach der EP 1 582 765 A1 offenbart ist. Hier ist die Dämpfernabe an einem Primärteil des Schwingungsdämpfers angebunden. Das Primärteil ist wiederum über Federpakete mit einem kupplungsseitigen Sekundärteil schwingungsgedämpft gekoppelt. Das Sekundärteil ist gegenüber dem Primärteil begrenzt bewegbar und mit der Kupplung verbunden. Die Kupplung ist in bekannter Weise mittels zwei in Achsrichtung voneinander beabstandete Kupplungslager auf einer Getriebeeingangswelle abgestützt.

Über diese beiden Kupplungslager in Achsrichtung auskragende Kupplungsbauteile, etwa das kupplungsseitige Sekundärteil des Schwingungsdämpfers, sind somit in sog. fliegender Lagerung auf der Getriebeeingangswelle abgestützt. Bei einer entsprechend großen Masse können diese auskragenden Kupplungsbauteile im Betrieb nachteilige Taumelbewegungen der Kupplung verursachen.

Das über die Kupplungslager auskragende, kupplungsseitige Sekundärteil kann alleine über das Primärteil des Schwingungsdämpfers nicht ausreichend abgestützt werden, da das Sekundärteil nicht starr, sondern über die zwischengeschalteten Federpakete mit dem Primärteil verbunden sind.

Aus der EP 1 584 830 A1 ist eine weitere Kupplungsvorrichtung bekannt, bei der die Kurbelwelle an einem Kupplungsgehäuse angebunden ist. Das Kupplungsgehäuse ist über Reiblamellen bzw. Stahllamellen mit einem kupplungsseitigen Primärteil koppelbar, das über ein Radiallager abgestützt ist. Das Primärteil des Schwingungsdämpfers ist mittels Federpakete mit einem Sekundärteil begrenzt bewegbar gekoppelt und von einer Getriebeeingangswelle getragen.

DE 102 23 780 zeigt eine weitere Kupplungsvorrichtung.

Die Aufgabe der Erfindung besteht darin, eine Kupplungsvorrichtung bereitzustellen, bei der im Kraftfahrzeugbetrieb entstehende Taumelbewegungen der Kupplung reduziert sind.

Diese Aufgabe ist durch die Merkmale des Patentanspruches 1 bzw. durch die Merkmale des Patentanspruches 16 gelöst. Vorteilhafte Weiterbildungen der Erfindung sind in den Unteransprüchen offenbart.

Gemäß dem kennzeichnenden Teil des Patentanspruchs 1 ist das kupplungsseitige Sekundärteil des Schwingungsdämpfers zusätzlich abgestützt. Dadurch ist mittels des, über die Kupplungslager auskragenden kupplungsseitigen Sekundärteils eine zusätzliche Abstützung der Kupplung erreicht, wodurch Taumelbewegungen der Kupplung vermieden sind.

Für eine Stabilisierung der Kupplung ohne Taumelbewegungen ist es von Vorteil, wenn das kupplungsseitige Sekundärteil des Schwingungsdämpfers über zumindest ein Lager an einem Getriebegehäuse abgestützt ist.

Das antriebsseitige Primärteil des Schwingungsdämpfers kann dabei über eine Kurbelwelle mit einer Antriebsmaschine bzw. einer Brennkraftmaschine gekoppelt sein und über die Federpakete schwingungsgedämpft das abtriebseitige Sekundärteil antreiben, das mit der Kupplung verbunden ist.

Bevorzugt kann das Sekundärteil des Schwingungsdämpfers einen Lagersitz aufweisen, über den sich das Sekundärteil auf dem erfindungsgemäßen Lager abstützt. Der Lagersitz kann nabenförmig an einer innenumfangsseitigen Öffnung des Sekundärteils geformt sein.

Bei einer Lagerung des Sekundärteils des Schwingungsdämpfers auf einem Drehbauteil, etwa einer Dämpfernabe, ist es von Vorteil, wenn das oben genannte Lager ein Loslager mit Axialspiel, etwa ein Nadellager, ist. Dadurch ist ein Axialspielausgleich zwischen dem Sekundärteil und dem Drehbauteil ermöglicht. Kurbelwellenseitige Axialbewegungen können daher über eine Freigängigkeit der Dämpfernabe und des zugeordneten Primärteils im Schwingungsdämpfer ausgeglichen werden. Außerdem werden die Axialbewegungen der Dämpfernabe nicht auf das Sekundärteil übertragen.

Für eine spielfreie Lagerung der Kupplung in Axialrichtung ist es bevorzugt, wenn das Sekundärteil über ein Festlager sowohl in Axialrichtung als auch in Radialrichtung gesichert, d. h. im Wesentlichen spielfrei gelagert ist. Für den oben erwähnten Fall, dass das kupplungsseitige Sekundärteil über ein Loslager auf dem Drehbauteil, etwa der Dämpfernabe, gelagert ist, kann das Festlager außenumfangsseitig und das Loslager innenumfangsseitig am nabenförmigen Lagersitz des Sekundärteils angeordnet sein.

Wenn das Drehbauteil eine Dämpfernabe des Primärbauteils ist, kann sich die Dämpfernabe durch eine Öffnung eines Getriebes erstrecken und mit einem Antriebsflansch verbunden sein, der über einen flexiblen Mitnehmer mit der Kurbelwelle der Brennkraftmaschine verbunden ist.

Bei einer Anordnung der Kupplungsvorrichtung innerhalb eines Getriebes ist es von Vorteil, wenn sich das Sekundärteil über das Festlager am Getriebe abstützt. Besonders von Vorteil ist es, wenn sich das Festlager an dem, die Getriebeöffnung begrenzenden Öffnungsrand abstützt. Dadurch ist fertigungstechnisch einfach vermieden, einen zusätzlichen Ansatz im Getriebe als Lagersitz auszubilden.

Die Dämpfernabe kann für eine stabile Lagerung auf einer Getriebeeingangswelle gelagert sein. Um hierbei zu vermeiden, dass Axialbewegungen von der Kurbelwelle über die Dämpfernabe auf die Getriebeeingangswelle übertragen werden, erfolgt diese Lagerung vorteilhaft über ein Loslager, das ein Axialspiel zulässt.

Somit kann die Dämpfernabe sowohl innenseitig als auch außenseitig jeweils über ein Loslager gelagert sein. Kurbelwellenseitige Axialbewegungen können daher über den oben genannten Antriebsflansch auf die Dämpfernabe bis zum zugeordneten Primärteil übertragen werden. Die Axialbewegungen des Primärteils werden dann durch die, über Federpakete schwingungsgedämpfte Kopplung zum Sekundärteil aufgenommen. Daher ist einerseits das Sekundärteil bzw. die Kupplung über das außenseitige Festlager in Axialrichtung und Radialrichtung spielfrei gelagert. Andererseits ist aufgrund des Loslagers zwischen dem Sekundärteil und der Dämpfernabe ein Axialspielausgleich ermöglicht.

Auf diese Weise kann erreicht werden, dass zwischen dem Antriebsflansch und der Dämpfernabe kein Axialspielausgleich erfolgen muss, um beispielsweise Axialbewegungen des Antriebsflansches gegenüber der Dämpfernabe auszugleichen. Für einen solchen Axialspielausgleich ist zwischen der Dämpfernabe und dem Antriebsflansch eine Verbindung mit Spiel erforderlich, was mit nachteiligen Klappergeräuschen verbunden ist.

Dagegen ist erfindungsgemäß eine geräuschfreie und spielfreie Verbindung zwischen Dämpfernabe und Antriebsflansch ermöglicht. Bei einer solchen spielfreien Verbindung erfolgt der Axialspielausgleich nämlich zwischen dem Primärteil und dem schwingungsgedämpft gekoppelten Sekundärteil.

Das Sekundärteil kann aus zwei Dämpferhalbschalen bestehen, zwischen denen das scheibenförmige Primärteil angeordnet sein kann, das an der Dämpfernabe angebunden ist. Eine besonders gute Stützwirkung kann erzielt werden, wenn das Sekundärteil auf der von der Kupplung abgewandten Seite des Primärteils über das erfindungsgemäße Lager abgestützt ist. Aus Platzgründen kann es jedoch auch bevorzugt sein, wenn das Sekundärteil auf der, der Kupplung zugewandten Seite des Primärteils abgestützt ist.

Um Bauraum einzusparen, ist es bevorzugt, wenn das dem Sekundärteil zugeordnete Festlager und/oder Radiallager in gleicher Axialposition radial übereinander angeordnet sind. Dabei ist es besonders vorteilhaft, wenn die Lager innerhalb der Getriebeöffnung angeordnet sind.

Für eine stabile Lagerung der Kupplung ohne Taumelbewegungen ist es günstig, wenn die Kupplung über zumindest ein Kupplungslager, vorzugsweise zwei voneinander beabstandete Kupplungslager abgestützt ist, so dass sich die Kupplungsmasse in Axialrichtung zwischen diesen beiden Kupplungslagern befindet. Der über die Kupplungslager auskragende Anteil der Kupplung, insbesondere das kupplungsseitige Sekundärteil, kann sich dann über das erfindungsgemäße Lager als ein drittes Kupplungslager abstützen. Damit die Kupplung in Axialrichtung spielfrei gelagert ist, kann sich das Sekundärteil zusätzlich über das bereits erwähnte Festlager abstützen. Die beiden anderen Kupplungslager können in diesem Fall daher mit Axialspiel versehen sein.

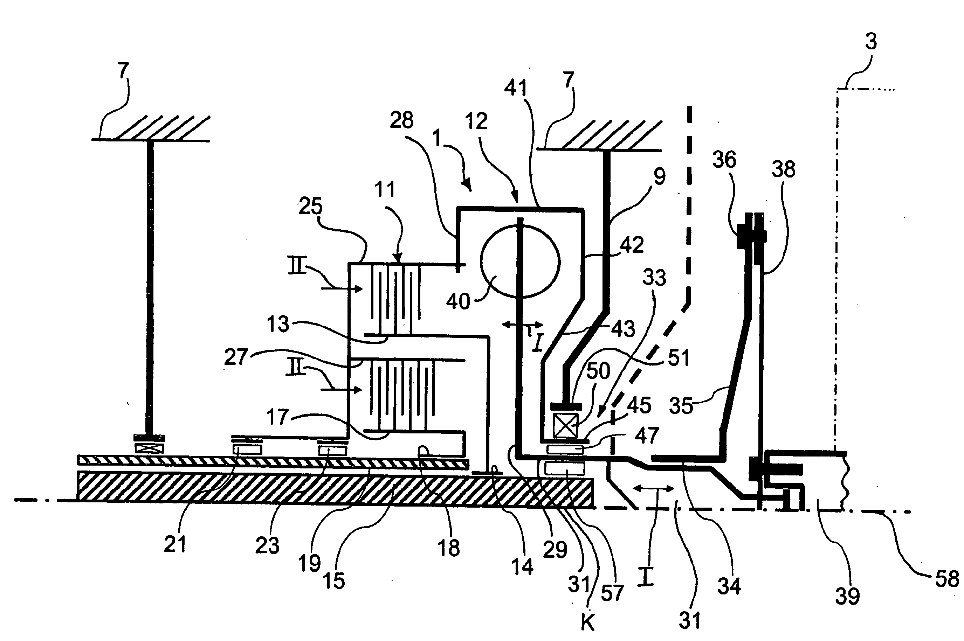

Nachfolgend ist ein Ausführungsbeispiel anhand der beigefügten Figur beschrieben. Die Figur zeigt in einer grob schematischen Längsschnittansicht die obere Hälfte eines Getriebes mit der darin angeordneten erfindungsgemäßen Kupplungsvorrichtung.

Gemäß der Figur ist eine Kupplungsvorrichtung 1 gezeigt, die in einem Antriebsstrang zwischen einer angedeuteten Brennkraftmaschine 3 und einem nicht gezeigten Wechselgetriebe angeordnet ist. Dabei ist die Kupplungsvorrichtung bzw. Kupplung-Dämpfer-Einheit 1 innerhalb eines Getriebegehäuses 7 angeordnet, das mittels eines Getriebedeckels 9 geschlossen ist.

Die Kupplung-Dämpfer-Einheit 1 weist eine Kupplung 11 mit einem damit verbundenen Schwingungsdämpfer 12 auf. Die in der Figur nur angedeutete Kupplung 11 ist hier beispielhaft eine nasslaufende Doppellamellenkupplung. Diese weist einen ersten Innenlamellenträger 13 auf, der über eine angedeutete Verzahnung 14 mit einer zugeordneten zentralen ersten Getriebeeingangswelle 15 verzahnt ist. Radial innerhalb des ersten Innenlamellenträgers 13 ist ein zweiter Innenlamellenträger 17 angeordnet, der über eine Verzahnung 18 mit einer zugeordneten zweiten Getriebeeingangswelle 19 verzahnt ist. Die zweite Getriebeeingangswelle 19 ist eine Hohlwelle, auf der die Kupplung 11 über zwei voneinander beabstandete Kupplungslager 21 und 23 abgestützt ist. Die beiden Kupplungslager 21 und 23 sind hier etwa als Nadellager mit einem Axialspiel ausgebildet. Jedem der beiden Innenlamellenträger 13 und 17 sind über angedeutete Lamellen jeweils entsprechende Außenlamellenträger 25 und 27 zugeordnet. Die Außenlamellenträger 25 und 27 sind in bekannter Bauart über eine Halbschale 28 eines später beschriebenen Sekundärteils 41 mit dem Schwingungsdämpfer 12 gekoppelt.

Der Schwingungsdämpfer 12 weist ein scheibenförmiges Primärteil 29 auf, das mit einer Dämpfernabe 31 versehen ist. Die Dämpfernabe 31 erstreckt sich durch eine Öffnung 33 des Getriebegehäusedeckels 9. Außerhalb des Getriebegehäuses 7 ist die Dämpfernabe 31 spielfrei über eine angedeutete Verzahnung 34 mit einem Antriebsflansch 35 verbunden. Der Antriebsflansch 35 ist umfangsseitig über Schrauben 36 mit einem flexiblen Mitnehmerblech 38 gekoppelt, das drehfest über Schrauben an der Kurbelwelle 39 der Brennkraftmaschine 3 befestigt ist. Durch die flexible Ausgestaltung des Mitnehmerblechs 38 können z. B. Versätze zwischen der Dämpfernabe 31 und der Kurbelwelle 39 kompensiert werden.

Das Primärteil 29 ist in bekannter Weise über angedeutete Federpakete 40 mit dem kupplungsseitigen Sekundärteil 41 begrenzt bewegbar gekoppelt.

Neben der Halbschale 28 weist das Sekundärteil 41 eine kurbelwellenseitige Dämpferschale 42 auf. Die Halbschale 28 und die Dämpferschale 42 des Sekundärteils 41 liegen einander axial gegenüber und sind randseitig miteinander verbunden. Zwischen der Halbschale 28 und der Dämpferschale 42 ist das Primärteil 29 mit den Federpaketen 40 angeordnet.

An ihrem ausgebauchten Bereich ist die kurbelwellenseitige Dämpferschale 42 durch ein scheibenförmiges Stützteil 43 bis zu einem Lagersitz 45 verlängert. Das Sekundärteil 41 ist über den Lagersitz 45 und das Radiallager 47 auf der Dämpfernabe 31 gelagert. Das Radiallager 47 ist als ein Loslager mit Axialspiel ausgestaltet, so dass sich die Dämpfernabe 31 in den mit Pfeil I angedeuteten Axialrichtungen gegenüber dem Lagersitz 45 des Sekundärteils 41 bewegen kann. Der Lagersitz 45 des Sekundärteils 41 ist durch die Getriebeöffnung 33 geführt und an seiner Außenumfangsseite über ein Festlager 50 an einem Öffnungsrand 51 der Getriebeöffnung 33 abgestützt. Zwischen dem Öffnungsrand 51 und der Dämpfernabe 31 ist ein nicht dargestellter Wellendichtring eingesetzt, die im Falle einer nass laufenden Kupplung die Getriebeöffnung 33 gegenüber dem Außenraum abdichtet.

Das Festlager 50 ist dabei über entsprechende, nicht gezeigte Anschläge am Lagersitz 45 sowie am Öffnungsrand 51 sowie mit zugeordneten Sicherungsringen in Axialrichtung gesichert.

Im Kraftfahrzeugbetrieb wird über die Kurbelwelle 39 der Brennkraftmaschine 3 und der damit gekoppelten Dämpfernabe 31 ein Drehmoment in den Schwingungsdämpfer 12 eingeleitet. Das Drehmoment wird von dem nabenseitigen Primärteil 29 über die Federpakete 40 schwingungsgedämpft auf das Sekundärteil 41 übertragen und über deren Halbschale 28 auf die Außenlamellenträger 25 und 27 der Kupplung 11 weitergeleitet. In der Kupplung 11 kann in bekannter Weise durch eine Axialbewegung nicht gezeigter Betätigungskolben in den Pfeilrichtungen II auf die den jeweiligen Außenlamellenträgern 25 und 27 zugeordneten Lamellenpaketen ein Reibschluss ausgeübt werden. Dadurch wird das Drehmoment über mindestens einen der Innenlamellenträger 13 oder 17 auf die jeweils zugeordnete Getriebeeingangswelle 19 bzw. 15 weitergeleitet.

Die Kupplung 11 und der Drehschwingungsdämpfer 12 bilden als starrer Verband ein sich im Betrieb mitdrehendes Kupplungs-Dämpfermodul. Dieses Modul ist mit dem ersten und zweiten Kupplungslager 21, 23 auf der Hohlwelle 19 abgestützt. Zusätzlich ist das Kupplungs-Dämpfermodul über den starren Verband zwischen deren Außenlamellenträger 25, der Halbschale 28 und der Dämpferschale 42 des Sekundärteils 41 mittels des Festlagers 50 als ein weiteres Kupplungslager getriebeseitig abgestützt. Dadurch sind zuverlässig Taumelbewegungen des Kupplungs-Dämpfermoduls verhindert. Solche Taumelbewegungen des Kupplungs-Dämpfermoduls würden sich ohne dem Lager 50 aufgrund des über die beiden Kupplungslager 21, 23 auskragenden kupplungsseitigen Sekundärteils 41 ergeben. Weiterhin ist das Kupplungs-Dämpfermodul über das Festlager 50 nicht nur radial, sondern auch in Axialrichtung spielfrei abgestützt, wodurch auch in Axialrichtung eine stabile Abstützung des Kupplungs-Dämpfermoduls 11 erreicht ist.

Während gemäß der Vorbeschreibung das Sekundärteil 41 axial spielfrei gelagert ist, kann sich die Dämpfernabe 31 in Axialrichtung I bewegen. Im Gegensatz zu dem axial und radial gesicherten Lagersitz 45 des Sekundärteils 41 ist nämlich die Dämpfernabe 31 außenumfangsseitig über das Loslager 47 mit Axialspiel und zusätzlich innenumfangsseitig ebenfalls über ein Loslager 57 mit Axialspiel gelagert.

Das heißt, dass - trotz des in axialer Richtung spielfrei festgelegten Lagersitzes 45 des Sekundärteils 41 - Axialbewegungen I der Dämpfernabe 31 auf dessen zugeordnetes Primärteil 29 in den Schwingungsdämpfer 12 eingeleitet werden können. Diese Axialbewegungen 1 werden im Betrieb von dem, über die Verzahnung 34 spielfrei mit der Dämpfernabe 31 verbundenen Antriebsflansch 35 auf die Dämpfernabe 31 übertragen. Im Schwingungsdämpfer 12 werden die mit Pfeilen I dargestellten Axialbewegungen des Primärteils 29 durch die, über die Federpakte 40 schwingungsgedämpfte Kopplung des Primärteils 29 mit dem Sekundärteil 41 aufgenommen. Demgegenüber werden aufgrund der spielfreien Verbindung zwischen dem Antriebsflansch 35 und der Dämpfernabe 31 Klappergeräusche verhindert.

Wie aus der Fig. hervorgeht, ragt der Lagersitz 45 des Sekundärteils 41 durch die Getriebeöffnung 33. Das außenseitig am Lagersitz 45 angeordnete Festlager 50 stützt sich dabei am Öffnungsrand 51 ab, während das innenseitig angeordnete Loslager 47 auf der Dämpfernabe 31 sitzt. Die beiden Lager 47 und 50 sind dabei zusammen mit dem Loslager 57 in gleicher Axialposition radial übereinander in der Getriebeöffnung 33 angeordnet. Alternativ hierzu sind jedoch in Abhängigkeit von den Einbauverhältnissen, etc. auch in Axialrichtung versetzte Anordnungen der Lager 47 und 50 denkbar.

Für den Fall, dass die Dämpfernabe 31 geringfügig in ihrer Winkellage gekippt ist, würde sich eine Taumelbewegung der Dämpfernabe 31 um einen in der Fig. angedeuteten Kipppunkt K ergeben. Der Kipppunkt K liegt innerhalb der Getriebeöffnung 33 auf der Drehachse 58. Durch die Anordnung des Lagersitzes 45 im Bereich des Kipppunkts K der Dämpfernabe 31 innerhalb der Getriebeöffnung 33 wird jedoch verhindert, dass die Taumelbewegung der Dämpfernabe 31 eine nachteilige Taumelbewegung des Sekundärteils 41 zur Folge hat.

## Patentansprüche

1. Kupplungsvorrichtung mit einer Kupplung (11) und einem damit verbundenen Drehschwingungsdämpfer (12), der ein kurbelwellenseitiges Primärteil (29) und ein, gegenüber dem Primärteil (29) bewegbares kupplungsseitiges Sekundärteil (41) aufweist, das mit der Kupplung (11) verbunden ist, die über zumindest ein Lager (21, 23) abgestützt ist, wobei für eine zusätzliche Abstützung der Kupplung (11) das kupplungsseitige Sekundärteil (41) des Drehschwingungsdämpfers (12) über zumindest ein Lager (50) getriebeseitig abgestützt ist, wobei das Sekundärteil (41) des Drehschwingungsdämpfers (12) einen Lagersitz (45) aufweist, über den das Sekundärteil (41) auf dem getriebeseitigen Lager (50) abgestützt ist, und wobei das Sekundärteil (41) über ein weiteres Lager (47) auf einem Drehbauteil (31) gelagert ist, **dadurch gekennzeichnet, dass** das weitere Lager (47) des Sekundärteils (41) ein Loslager mit Axialspiel ist, während das getriebeseitige Lager (50) als ein Festlager das Sekundärteil (41) des Drehschwingungsdämpfers axial und radial spielfrei abstützt, wobei der Lagersitz (45) des Sekundärteils (41) außenumfangsseitig über das Festlager (50) abgestützt und innenumfangsseitig über das als Loslager ausgebildete weitere Lager (47) gelagert ist, und wobei das Drehbauteil (31) eine Nabe des Primärteils (29) ist, die mit Axialspiel gelagert ist, so dass Axialbewegungen (I) der Nabe (31) auf das Primärteil (29) des Drehschwingungsdämpfers (12) übertragbar sind.

2. Kupplungsvorrichtung nach Anspruch 1, **dadurch gekennzeichnet, dass** das Sekundärteil (41) bewegungsentkoppelt von der Nabe (31) des Primärteils (29) gelagert ist, so dass trotz Axialbewegungen (I) der Nabe (31) eine axiale spielfreie Lagerung des Sekundärteils (41) ermöglicht ist.

3. Kupplungsvorrichtung nach Anspruch 1 oder 2, **dadurch gekennzeichnet, dass** die Nabe (31) des Primärteils (29) des Drehschwingungsdämpfers (12) mit einem Antriebsflansch (35) verbunden ist.

4. Kupplungsvorrichtung nach Anspruch 3, **dadurch gekennzeichnet, dass** der Antriebsflansch (35) spielfrei mit der Nabe (31) des Primärteils (29) verbunden ist.

5. Kupplungsvorrichtung nach einem der Ansprüche 1 bis 4, **dadurch gekennzeichnet, dass** die Nabe (31) des Primärbauteils (29) über ein Loslager (57) mit Axialspiel gelagert ist.

6. Kupplungsvorrichtung nach einem der vorhergehenden Ansprüche, **dadurch gekennzeichnet, dass** die Kupplung (11) über mindestens ein Kupplungslager (21, 23) abgestützt ist.

7. Kupplungsvorrichtung nach Anspruch 6, **dadurch gekennzeichnet, dass** das Kupplungslager (21, 23) und/oder das weitere Lager (47) des Sekundärteils (41) Radiallager sind.

8. Kupplungsvorrichtung nach einem der vorhergehenden Ansprüche, **dadurch gekennzeichnet, dass** das Sekundärteil (41) auf der von der Kupplung (11) abgewandten Seite des Primärteils (29) abgestützt ist.

9. Kupplungsvorrichtung nach einem der vorhergehenden Ansprüche, **dadurch gekennzeichnet, dass** das Sekundärteil (41) auf der, der Kupplung (11) zugewandten Seite des Primärteils (29) abgestützt ist.

10. Kupplungsvorrichtung nach einem der Ansprüche 1 bis 9, **dadurch gekennzeichnet, dass** die Nabe (31) des Primärteils (29) durch eine Öffnung (33) eines Getriebes geführt ist.

11. Kupplungsvorrichtung nach einem der vorhergehenden Ansprüche, **dadurch gekennzeichnet, dass** das weitere Lager (47) des Sekundärteils (41) und/oder das als Festlager ausgebildete erste Lager (50) in der Öffnung (33) des Getriebes angeordnet sind.

12. Kupplungsvorrichtung nach einem der Ansprüche 5 bis 11, **dadurch gekennzeichnet, dass** das Loslager (57) in der Getriebeöffnung (33) angeordnet ist.

13. Kupplungsvorrichtung nach einem der Ansprüche 1 bis 12, **dadurch gekennzeichnet, dass** der Lagersitz (45) des Sekundärteils (41) des Schwingungsdämpfers (12) durch die Getriebeöffnung (33) geführt ist.

14. Kupplungsvorrichtung nach einem der Ansprüche 1 bis 13, **dadurch gekennzeichnet, dass** das Sekundärteil (41) über das Festlager (50) am Getriebe abgestützt ist.

15. Kupplungsvorrichtung nach einem der Ansprüche 3 bis 14, **dadurch gekennzeichnet, dass** der Antriebsflansch (35) über einen flexiblen Mitnehmer (38) mit der Kurbelwelle (39) verbunden ist.

16. Getriebe für ein Kraftfahrzeug, in der eine Kupplungsvorrichtung nach einem der vorhergehenden Ansprüche angeordnet ist.

## Claims

1. Clutch device comprising a clutch (11) and a torsional vibration damper (12) connected thereto which has a crankshaft-side primary part (29) and a clutch-side secondary part (41) opposite the primary part (29), which secondary part is connected to the clutch (11) which is supported via at least one bearing (21, 23), the clutch-side secondary part (41) of the torsional vibration damper (12) being supported on the gearbox side via at least one bearing (50) for additional support of the clutch (11), the secondary part (41) of the torsional vibration damper (12) comprising a bearing seat (45) via which the secondary part (41) is supported on the gearbox-side bearing (50), and the secondary part (41) being mounted on a rotational component (31) via an additional bearing (47), **characterised in that** the additional bearing (47) of the secondary part (41) is a movable bearing having axial play, while the gearbox-side bearing (50), as a fixed bearing, supports the secondary part (41) of the torsional vibration damper axially and radially without play, the bearing seat (45) of the secondary part (41) being supported on the outer peripheral side via the fixed bearing (50) and being mounted on the inner peripheral side via the additional bearing (47) which is formed as a movable bearing, and the rotational component (31) being a hub of the primary part (29), which hub is mounted with axial play in such a way that axial movements (I) of the hub (31) can be transferred to the primary part (29) of the torsional vibration damper (12).

2. Clutch device according to claim 1, **characterised in that** the secondary part (41) is mounted in a movement-decoupled manner by the hub (31) of the primary part (29), in such a way that despite axial movements (I) of the hub (31), it is possible to axially mount the secondary part (41) without play.

3. Clutch device according to either claim 1 or claim 2, **characterised in that** the hub (31) of the primary part (29) of the torsional vibration damper (12) is connected to a drive flange (35).

4. Clutch device according to claim 3, **characterised in that** the drive flange (35) is connected without play to the hub (31) of the primary part (29).

5. Clutch device according to any of claims 1 to 4, **characterised in that** the hub (31) of the primary part (29) is mounted with axial play via a movable bearing (57).

6. Clutch device according to any of the preceding claims, **characterised in that** the clutch (11) is supported via at least one clutch bearing (21, 23).

7. Clutch device according to claim 6, **characterised in that** the clutch bearing (21, 23) and/or the additional bearing (47) of the secondary part (41) are radial bearings.

8. Clutch device according to any of the preceding claims, **characterised in that** the secondary part (41) is supported on the side of the primary part (29) facing away from the clutch (11).

9. Clutch device according to any of the preceding claims, **characterised in that** the secondary part (41) is supported on the side of the primary part (29) facing the clutch (11).

10. Clutch device according to any of claims 1 to 9, **characterised in that** the hub (31) of the primary part (29) is guided through an opening (33) of a gearbox.

11. Clutch device according to any of the preceding claims, **characterised in that** the additional bearing (47) of the secondary part (41) and/or the first bearing (50) which is formed as a fixed bearing are arranged in the opening (33) of the gearbox.

12. Clutch device according to any of claims 5 to 11, **characterised in that** the movable bearing (57) is arranged in the gearbox opening (33).

13. Clutch device according to any of claims 1 to 12, **characterised in that** the bearing seat (45) of the secondary part (41) of the torsional vibration damper (12) is guided through the gearbox opening (33).

14. Clutch device according to any of claims 1 to 13, **characterised in that** the secondary part (41) is supported on the gearbox via the fixed bearing (50).

15. Clutch device according to any of claims 3 to 14, **characterised in that** the drive flange (35) is connected to the crankshaft (39) via a flexible dog (38).

16. Gearbox for a motor vehicle, in which a clutch device according to any of the preceding claims is arranged.

## Revendications

1. Dispositif d'embrayage pourvu d'un embrayage (11) et d'un amortisseur de vibrations torsionnelles (12) qui lui est raccordé et qui présente une partie primaire (29) côté vilebrequin et une partie secondaire (41) côté embrayage déplaçable par rapport à la partie primaire (29), laquelle partie secondaire est raccordée à l'embrayage (11) qui est supporté sur au moins un palier (21, 23), dans lequel, pour assurer un support supplémentaire de l'embrayage (11), la partie secondaire (41) côté embrayage de l'amortisseur de vibrations torsionnelles (12) est supportée côté transmission sur au moins un palier (50), dans lequel la partie secondaire (41) de l'amortisseur de vibrations torsionnelles (12) présente un siège de palier (45), par lequel la partie secondaire (41) est supportée sur le palier (50) côté transmission et dans lequel la partie secondaire (41) est montée via un autre palier (47) sur un composant rotatif (31), **caractérisé en ce que** l'autre palier (47) de la partie secondaire (41) est un palier libre avec un jeu axial, tandis que le palier (50) côté transmission supporte, comme palier fixe, la partie secondaire (41) de l'amortisseur de vibrations torsionnelles sans jeu axialement et radialement, dans lequel le siège de palier (45) de la partie secondaire (41) est supporté côté pourtour externe sur le palier fixe (50) et est monté côté pourtour interne sur l'autre palier (47) conformé en palier libre et dans lequel le composant rotatif (31) est un moyeu de la partie primaire (29) qui est monté avec un certain jeu axial de sorte que des mouvements axiaux (I) du moyeu (31) puissent être transmis sur la partie primaire (29) de l'amortisseur de vibrations torsionnelles (12).

2. Dispositif d'embrayage selon la revendication 1, **caractérisé en ce que** la partie secondaire (41) est montée, désaccouplée de tout mouvement avec le moyeu (31) de la partie primaire (29), de sorte que, malgré les mouvements axiaux (I) du moyeu (31), un montage axial sans jeu de la partie secondaire (41) puisse se faire.

3. Dispositif d'embrayage selon la revendication 1 ou la revendication 2, **caractérisé en ce que** le moyeu (31) de la partie primaire (29) de l'amortisseur de vibrations torsionnelles (12) est raccordé à un flasque d'entraînement (35).

4. Dispositif d'embrayage selon la revendication 3, **caractérisé en ce que** le flasque d'entraînement (35) est raccordé sans jeu au moyeu (31) de la partie primaire (29).

5. Dispositif d'embrayage selon l'une quelconque des revendications 1 à 4, **caractérisé en ce que** le moyeu (31) du composant primaire (29) est monté avec un jeu axial sur un palier libre (57).

6. Dispositif d'embrayage selon l'une quelconque des revendications précédentes, **caractérisé en ce que** l'embrayage (11) est supporté sur au moins un palier d'embrayage (21, 23).

7. Dispositif d'embrayage selon la revendication 6, **caractérisé en ce que** le palier d'embrayage (21, 23) et/ou l'autre palier (47) de la partie secondaire (41) sont des paliers radiaux.

8. Dispositif d'embrayage selon l'une quelconque des revendications précédentes, **caractérisé en ce que** la partie secondaire (41) est supportée sur le côté de la partie primaire (29) opposé à l'embrayage (11).

9. Dispositif d'embrayage selon l'une quelconque des revendications précédentes, **caractérisé en ce que** la partie secondaire (41) est supportée sur le côté de la partie primaire (29) tourné vers l'embrayage (11).

10. Dispositif d'embrayage selon l'une quelconque des revendications 1 à 9, **caractérisé en ce que** le moyeu (31) de la partie primaire (29) est guidé à travers une ouverture (33) d'une transmission.

11. Dispositif d'embrayage selon l'une quelconque des revendications précédentes, **caractérisé en ce que** l'autre palier (47) de la partie secondaire (41) et/ou le premier palier (50) conformé en palier fixe sont aménagés dans l'ouverture (33) de la transmission.

12. Dispositif d'embrayage selon l'une quelconque des revendications 5 à 11, **caractérisé en ce que** le palier libre (57) est aménagé dans l'ouverture (33) de la transmission.

13. Dispositif d'embrayage selon l'une quelconque des revendications 1 à 12, **caractérisé en ce que** le siège de palier (45) de la partie secondaire (41) de l'amortisseur de vibrations (12) est guidé à travers l'ouverture (33) de la transmission.

14. Dispositif d'embrayage selon l'une quelconque des revendications 1 à 13, **caractérisé en ce que** la partie secondaire (41) est supportée sur la transmission via le palier fixe (50).

15. Dispositif d'embrayage selon l'une quelconque des revendications 3 à 14, **caractérisé en ce que** le flasque d'entraînement (35) est raccordé à l'arbre de vilebrequin (39) via un entraîneur flexible (38).

16. Transmission pour un véhicule automobile, dans laquelle est agencé un dispositif d'embrayage selon l'une quelconque des revendications précédentes.
